**Europäisches Patentamt**

**European Patent Office**

**Office européen des brevets**

(19)

(11) Numéro de publication: **0 178 196 B1**

# FASCICULE DE BREVET EUROPEEN

(12)

(45) Date de publication du fascicule du brevet:
**26.10.88**

(51) Int. Cl.⁴: **B 60 R 11/02**

(21) Numéro de dépôt: **85401668.0**

(22) Date de dépôt: **21.08.85**

(54) Véhicule automobile avec aménagement intéreur permettant le branchement d'appareils amovibles divers.

(30) Priorité: **03.10.84 FR 8415186**

(43) Date de publication de la demande:
**16.04.86 Bulletin 86/16**

(45) Mention de la délivrance du brevet:
**26.10.88 Bulletin 88/43**

(84) Etats contractants désignés:
**DE GB IT**

(56) Documents cités:
**FR - A - 2 236 296**
**FR - A - 2 371 802**

(73) Titulaire: **AUTOMOBILES PEUGEOT, 75, avenue de la Grande Armée, F-75116 Paris (FR)**
Titulaire: **AUTOMOBILES CITROEN, 62 Boulevard Victor-Hugo, F-92200 Neuilly-sur-Seine (FR)**

(72) Inventeur: **Olsen, Carl, 55, Boulevard Suchet, F-75016 Paris (FR)**

(74) Mandataire: **Beauchamps, Georges et al, Cabinet Z.Weinstein 20, avenue de Friedland, F-75008 Paris (FR)**

ACTORUM AG

## Description

La présente invention concerne l'utilisation dans un véhicule automobile d'un rail électriquement conducteur permettant le branchement d'appareils divers.

Il est déjà connu de brancher ponctuellement dans l'habitacle d'un véhicule des appareils électriques divers tels que par exemple un petit aspirateur, une lampe baladeuse ou même un rasoir électrique en utilisant la prise de courant constituée par l'allume-cigare du véhicule.

Cependant, une telle prise de courant se trouve à un emplacement fixe et déterminé, de sorte qu'elle est loin de procurer toutes les commodités voulues pour une grande diversité d'appareils, surtout si ceux-ci sont destinés à être utilisés par tous les passagers du véhicule.

Par ailleurs, on connaît d'après le document FR-A-2 236 296 un rail électriquement conducteur susceptible de recevoir des adaptateurs pour établir une connexion mobile avec des appareils divers d'éclairage ou autres.

Cependant, il n'a pas été proposé jusqu'à maintenant d'utiliser dans un véhicule un rail conducteur qui permettrait aux passagers situés tant à l'avant qu'à l'arrière du véhicule, de brancher et de déplacer à volonté des appareils divers avec le maximum de commodité et de confort pour eux.

La présente invention a pour but de combler cette lacune en proposant l'utilisation dans un véhicule d'un rail électriquement conducteur permettant le branchement et le déplacement d'appareils divers et s'étendant longitudinalement entre les sièges droite et gauche du véhicule pour permettre aux passagers avant et/ou arrière de ce véhicule tant le branchement que le déplacement desdits appareils.

On comprend donc déjà que les passagers à l'avant et à l'arrière du véhicule pourront manipuler très commodément des appareils quelconques, tels que des jeux électroniques, un poste radio, un radio-téléphone etc. . . . .

Selon une autre caractéristique de l'invention, le rail précité est disposé au sommet d'une poutre qui s'étend depuis l'avant jusqu'à l'arrière de l'habitacle du véhicule.

Suivant encore une autre caractéristique de l'invention, le rail précité est muni de pistes reliées à la batterie du véhicule et également à d'autres éléments de ce véhicule, tels que par exemple une antenne radio-électrique.

L'invention est décite dans la description détaillée qui suit et qui se réfère aux dessins annexés, donnés uniquement à titre d'exemple, et dans lesquels:

La figure 1 est une vue très schématique de dessus d'un véhicule aménagé conformément aux principes de l'invention et,

la figure 2 est une vue en coupe faite sensiblement siuvant la ligne II–II de la figure 1.

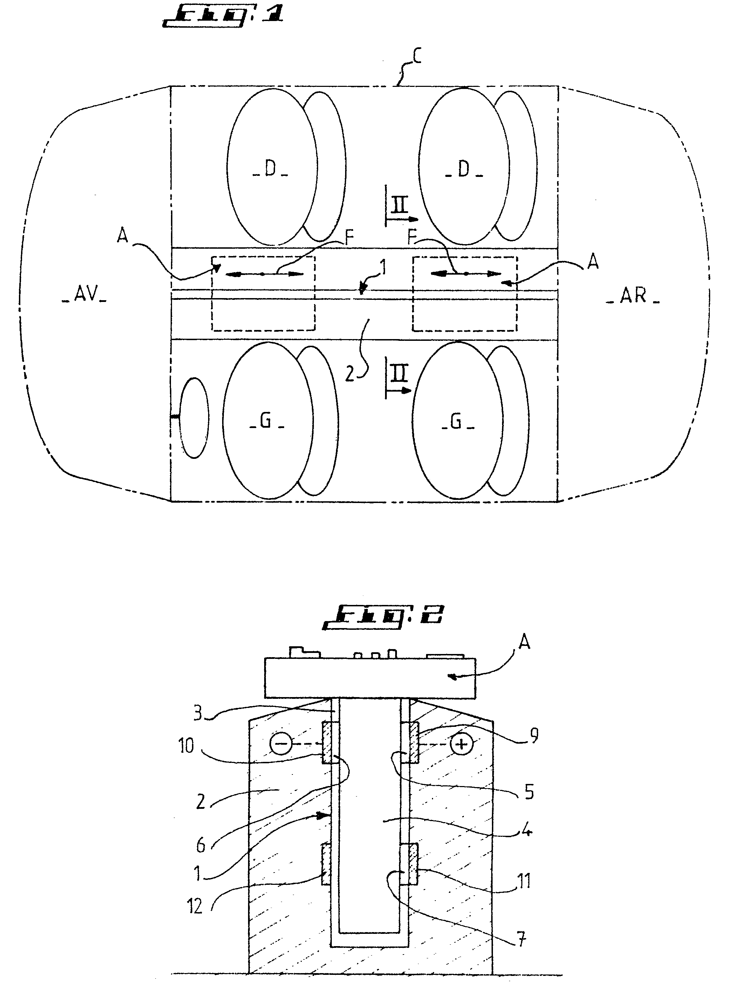

En se reportant à la figure 1, on voit très schématiquement un véhicule dont l'avant, l'arrière et les côtés ont été repérés respectivement AV, AR, et C, et qui, conformément aux principes de l'invention, comporte un aménagement constitué par un rail 1, qui s'étend longitudinalement entre les sièges droite D et gauche G du véhicule.

Le rail 1, comme on le voit mieux sur la figure 2, est disposé au sommet d'une poutre 2.

Revenant à la figure 1, on voit que la poutre 2 s'étend depuis l'avant jusqu'à l'arrière de l'habitacle du véhicule suivant sensiblement l'axe longitudinal médian de celui-ci.

On pourrait parfaitement, sans sortir du cadre de l'invention, prévoir une poutre 2 avec rail 1 dont la longueur serait plus petite que celle représentée sur la figure 1, ou bien dont l'emplacement par rapport aux sièges droite D et gauche G serait quelque peu différent de celui représenté sur ladite figure.

Suivant un mode de réalisation préféré, la poutre 2 avec son rail 1 présente une section transversale triangulaire, au moins au niveau de sa partie supérieure, comme cela apparaît clairement sur la figure 2.

Ainsi, le rail 1 permet tant le branchement d'appareils quelconques A que le déplacement longitudinal de ces appareils entre les sièges droite D et gauche G du véhicule, comme matérialisé par les flèches F.

Les appareils A peuvent être par exemple un radio-téléphone, des jeux électroniques, un poste radio etc. . . ., étant entendu que ces appareils comporteront une partie formant broche ou analogue 4 susceptible de pénétrer dans le rail de branchement 1 afin d'assurer les connexions nécessaires.

A cet égard, on voit sur la figure 2 que la broche 4 de l'appareil A comporte par exemple trois pistes 5, 6 et 7 susceptibles de coopérer par contact respectivement avec des pistes 9, 10 et 11 agencées dans les parois internes en vis-à-vis du rail 1.

La piste 9 pourra par exemple être reliée au pôle plus de la batterie du véhicule, tandis que la piste 10 sera reliée au moins, c'est-à-dire par exemple à la masse dudit véhicule.

La piste 11 peut être reliée par exemple à une antenne de radio-téléphone. Cette piste 11 coopère par contact avec la piste 7 de la broche 4 de l'appareil A qui est ici un radio-téléphone.

Le rail 1 peut évidemment comporter d'autres pistes, telles que 12, qui sont nécessaires pour le fonctionnement d'autres appareils. C'est ainsi que la piste 12 peut être par exemple reliée à une antenne de poste radio.

Dès lors, le nombre de pistes dans le rail 1 peut être quelconque. Leur structure peut également être quelconque sans sortir du cadre de l'invention, et à cet égard on peut prévoir des moyens de clippage associés aux pistes du rail, et dans lesquels pourra être retenue la broche 4 des appareils A.

Par ailleurs, on voit sur la figure 2 que le rail 1 forme un seul canal 3, mais on pourrait parfaitement, sans sortir du cadre de l'invention, prévoir un rail comportant plusieurs canaux de branchement.

Enfin, bien que cela ne soit pas représenté sur les figures, des lèvres formant cache-poussières peuvent être prévues au sommet de la poutre 2, de manière à abriter l'intérieur du canal 3 en l'absence d'appareils branchés sur le rail 1.

C'est dire que l'invention n'est nullement limitée au mode de réalisation décrit et illustré qui n'a été donné qu'à titre d'exemple.

## Revendications.

1. Utilisation dans un véhicule d'un rail (1) électriquement conducteur permettant le branchement et le déplacement d'appareils divers (A) et s'étendant longitudinalement entre les sièges droite (D) et gauche (G) du véhicule pour permettre aux passagers avant et/ou arrière de ce véhicule tant le branchement que le d déplacement desdits appareils (A).

2. Utilisation selon la revendication 1, caractérisée en ce que le rail précité (1) est disposé au sommet d'une poutre (2) qui s'étend depuis l'avant (AV) jusqu'à l'arrière (AR) de l'habitacle du véhicule.

3. Utilisation selon la revendication 1 ou 2, caractérisée en ce que le rail précité (1) est muni de pistes (9. 10, 11) reliées à la batterie du véhicule et à une antenneradio-électrique.

## Patentansprüche

1. Verwendung in einem Fahrzeug von einer elektrisch leitfähigen Schiene (1), die die Schaltung und die Versetzung verschiedener Apparate (A) ermöglicht und die sich zwischen den rechten (D) und den linken (G) Sitzen des Fahrzeugs längs erstreckt, damit die vorderen und/oder hinteren Insassen dieses Fahrzeugs die besagten Apparate (A) schalten und auch versetzen können.

2. Verwendung nach Anspruch 1, dadurch gekennzeichnet, dass die besagte Schiene (1) auf der oberen Seite eines sich von der vorderen Seite (AV) bis zur hinteren Seite (AR) des Karosseriegehäuses des Fahrzeugs erstreckenden Balkens (2) liegt.

3. Verwendung nach Anspruch 1 oder 2, dadurch gekennzeichnet, dass die besagte Schiene (1) mit, mit der Batterie des Fahrzeugs und mit einer radioelektrischen Antenne verbundenen Leiterbahnen (9, 10, 11) versehen ist.

## Claims

1. Utilization in a vehicle of an electrically conductive rail (1) which permits connecting and displacing various apparatus (A) and which stretches longitudinally between the right-hand (D) and left-hand (G) seats of the vehicle to permit the front and/or rear passengers of this vehicle to connect as well as to displace the said apparatus (A).

2. Utilization according to claim 1, characterized in that the aforesaid rail (1) is disposed at the top of a girder (2) which stretches from the front (AV) to the rear (AR) of the passenger space of the vehicle.

3. Utilization according to claim 1 or 2, characterized in that the aforesaid rail (1) is provided with tracks (9, 10, 11) connected to the battery of the vehicle and to a radioelectric antenna.

**Fig. 1**

**Fig. 2**